# EUROPÄISCHE PATENTSCHRIFT

(11) **EP 3 853 074 B1**
(45) Veröffentlichungstag und Bekanntmachung des Hinweises auf die Patenterteilung: **07.06.2023**
(21) Anmeldenummer: 19769776.6
(22) Anmeldetag: 13.09.2019
(51) Int. Cl.: B60R 7/04, B60N 2/00

(54) **MITTELKONSOLE ZWISCHEN ZWEI FAHRZEUGSITZEN UND KRAFTFAHRZEUG MIT SOLCH EINER MITTELKONSOLE**
CENTER CONSOLE BETWEEN TWO VEHICLE SEATS AND MOTOR VEHICLE HAVING A CENTER CONSOLE OF THIS TYPE
CONSOLE CENTRALE ENTRE DEUX SIÈGES DE VÉHICULE ET VÉHICULE AUTOMOBILE COMPRENANT UNE TELLE CONSOLE CENTRALE

(30) Priorität: 17.09.2018 DE 102018122669; 17.09.2018 DE 102018122688; 17.09.2018 DE 102018122653
(43) Veröffentlichungstag der Anmeldung: 28.07.2021
(60) Teilanmeldung: 23170269.7
(73) Patentinhaber: Motherson Innovations Company Limited, London EC2N 2AX (GB)
(72) Erfinder: WIECZOREK, Romeo, 70327 Stuttgart (DE); DOBRETE, Alexandru, 70327 Stuttgart (DE); KOLLER, Matthias, 70327 Stuttgart (DE); MOHRMANN, Richard, 70327 Stuttgart (DE); JAEGER, David-Kenneth, 70327 Stuttgart (DE)
(74) Vertreter: Weber-Bruls, Dorothée
(86) Internationale Anmeldenummer: PCT/EP2019/074588
(87) Internationale Veröffentlichungsnummer: WO 2020/058143

(56) Entgegenhaltungen:
- EP-A1- 1 277 620
- WO-A1-2014/055257
- DE-A1- 10 334 999
- DE-A1-102004 053 037
- DE-U1-202014 103 266
- JP-A- 2002 019 530
- JP-A- 2005 297 826
- US-A1- 2003 234 550
- US-A1- 2005 052 044
- US-A1- 2008 315 606
- US-A1- 2009 108 609

## Beschreibung

Die vorliegende Erfindung betrifft ein Kraftfahrzeug mit einer Mittelkonsole zwischen zwei Fahrzeugsitzen nach dem Oberbegriff von Anspruch 1.

Durch teil- oder vollautomatisiertes Fahren von Kraftfahrzeugen entsteht Potential für eine alternative Nutzung und darauf bezogen eine andere Ausgestaltung eines Fahrzeuginnenraums in Bezug zur Ausgestaltung von Fahrzeuginnenräumen konventioneller Kraftfahrzeuge ohne automatisierte Fahrfunktion. Im automatisierten Fahrbetrieb kann beispielsweise ein Fahrer seine Aufmerksamkeit den anderen Fahrzeuginsassen widmen, so dass ein Drehen eines Fahrersitzes zu den anderen Sitzen oder ein Drehen der Sitze einer vorderen Sitzreihe zu einer hinteren Sitzreihe den kommunikativen und sozialen Austausch der Fahrzeuginsassen fördern kann.

Hinderlich für eine Drehbewegung von Fahrzeugsitzen ist eine neben den Sitzen befindliche Mittelkonsole. In einem herkömmlich großen Kraftfahrzeug mit Mittelkonsole bedarf es einer komplizierten Mechanik, um die Sitze und die Mittelkonsole aneinander vorbei bewegen zu können.

Aus der DE 10 2014 224 560 A1 ist eine Anordnung für einen Fahrzeuginnenraum bekannt, mit einer ersten Sitzreihe, die wenigstens einen Sitz aufweist und mit einer in dem Fahrzeuginnenraum vor oder hinter der ersten Sitzreihe angeordneten zweiten Sitzreihe, die mindestens einen Sitz aufweist, wobei die erste Sitzreihe in oder auf einer in oder auf einem Boden des Fahrzeuginnenraums drehbar gelagerten Platte angeordnet ist. Weiter ist bei dieser Anordnung vorgesehen, dass wenigstens eine verschiebbar gelagerte Konsole vorgesehen ist, die entlang zumindest einer in oder auf dem Boden des Fahrzeugs angeordneten Schiene verschiebbar ist, welche wiederum mehrteilig ausgebildet ist und zumindest bereichsweise in oder auf der Platte angeordnet ist. Zum Verschieben der Konsole, insbesondere zum elektromotorischen Verschieben, ist der Konsole bevorzugt auch eine Antriebsvorrichtung zugeordnet, die eine in oder an der Schiene geführte Schubkette aufweist, die mit der Konsole verbunden ist. Durch die Schubkette, die durch die Antriebsvorrichtung betätigbar ist, lässt sich die Konsole entlang der Schiene an eine beliebige Stelle verschieben. In einer beschriebenen Ausführungsform werden bei einem Verdrehen der Platte zwei Sitze, die eine Sitzreihe auf der Platte bilden, gegeneinander verfahren und aufeinander zubewegt, damit die Sitze nicht mit Seitenwänden des Fahrzeuginnenraums in Konflikt geraten und um ein Verdrehen der Sitze auf kleinstmöglichen Raum zu gewährleisten. Damit dabei keine Konsole im Bewegungsweg der Sitze liegt, wird diese durch die Antriebsvorrichtung automatisch in eine abseits der Platte befindliche Freigabeposition, beispielsweise bei einem Armaturenbrett, verfahren.

Die DE 20 2004 013 633 U1 beschreibt eine Mittelkonsole eines Kraftfahrzeuges mit zumindest einem mit einem Deckelelement verschließbaren containerförmigen Ablagefach, welches mittels wenigstens zweier beabstandeter und parallel zueinander an der Mittelkonsole befestigten sowie in Längsrichtung des Kraftfahrzeuges weisenden Linearführungselementen längsverschiebbar geführt ist. Dabei sind die Linearführungselemente in Fahrtrichtung des Kraftfahrzeuges gesehen kontinuierlich ansteigend oder bogenförmig profiliert ausgebildet, wodurch bei einem Verschieben des Ablagefaches samt Deckelelement eine Bewegung desselben sowohl in Fahrzeuglängsrichtung als auch in Fahrzeughochrichtung erfolgt. Das Deckelelement kann als Armauflage ausgebildet sein und das Ablagefach samt Deckelelement kann manuell oder elektromotorisch längsverschiebbar sein.

In der US 7,543,871 B2 wird eine Mittelkonsole für ein Armaturenbrett gezeigt, die ein Gehäuse mit einem Anzeigebereich und einem dem Gehäuse zugeordneten Betätigungsmechanismus umfasst, wobei der Betätigungsmechanismus die Bewegung des Gehäuses relativ zum Armaturenbrett erlaubt. Die Mittelkonsole nimmt eine relativ zum Fahrzeugboden aufrechte Stellung ein und der Anzeigebereich weist eine Kontrollvorrichtung auf.

In der DE 103 34 999 A1 wird zudem eine verstellbare Mittelkonsole beschrieben, die in einem Fahrzeug zwischen zwei Vordersitzen und im Anschluss an ein Armaturenbrett angeordnet ist. Zumindest ein Abschnitt der Mittelkonsole oder die gesamte Mittelkonsole ist von einer vorderen Endposition zwischen den Vordersitzen in Fahrzeuglängsrichtung nach hinten in eine beliebige Zwischenposition oder eine hintere Endposition vor oder zwischen Rücksitzen und zurück verstellbar. Das Verstellen der Mittelkonsole kann manuell oder über einen Antrieb, insbesondere einen Elektromotor, der mit einem selbsthemmenden Getriebe versehen ist, erfolgen. Dazu sind in der verstellbaren Mittelkonsole Führungsmittel ausgebildet, die in eine im Fahrzeugboden vorgesehene Führung eingreifen.

Die DE 101 37 036 A1 zeigt im Innenraum eines Fahrzeugs eine Armaturentafel sowie einen in Fahrzeuglängsrichtung verschiebbaren Container, wobei die Armaturentafel eine Aussparung zum Einschieben des Containers derart aufweist, dass der Container in seiner eingeschobenen Stellung bündig mit der Armaturentafel abschließt. Der Container ist auf mindestens einer Schiene verfahrbar, die in den Boden des Fahrzeugs eingelassen ist und sich zumindest im Bereich zwischen den Vordersitzen des Fahrzeugs und deren Fußräumen erstreckt, aber auch bis in den Kofferraum des Fahrzeugs geführt sein kann. Zudem kann die Schiene mit einer Stromzuführung für den Container versehen und der Container mit elektrischen Anschlüssen bestückt sein.

Die WO 2014/055257 A1 lehrt eine Aufbewahrungskonsole für ein Fahrzeug, wobei die Aufbewahrungskonsole ein Gehäuse umfasst, das von einer verstauten Position in eine aufrechte Position bewegbar ist, wobei das Gehäuse eine Oberseite aufweist, die in der verstauten Position im Wesentlichen bündig mit einem Boden des Fahrzeugs ist und in der aufrechten Position vom Boden beabstandet ist.

Aus der US 2005/052044 A1 ist eine Aufbewahrungskastenstruktur zur Verwendung mit einem Fahrzeug bekannt, die mit ersten und zweiten Sitzen ausgestattet ist, von denen jeder ein Sitzkissen und eine Rückenlehne aufweist und die in der Breitenrichtung des Fahrzeugs angeordnet sind, während ein gegebener Raum dazwischen verbleibt. Die Aufbewahrungskastenstruktur umfasst dabei: eine Aufbewahrungsbox mit einem Kastenkörper mit einer oberen Öffnung, wobei die Aufbewahrungsbox in einer Konfiguration ausgebildet ist, die in der Breitenrichtung zwischen dem ersten und dem zweiten Sitz angeordnet werden kann; und einen Stützmechanismus, der die Aufbewahrungsbox derart trägt, dass die Aufbewahrungsbox selektiv entweder eine Verwendungsposition einnehmen kann, in der sich die Aufbewahrungsbox zwischen dem ersten und dem zweiten Sitz befindet, oder eine zurückgezogene Position, in der die Aufbewahrungsbox zurückgezogen ist, um einen Raum bereitzustellen zwischen dem ersten und dem zweiten Sitz.

Die US 2009/108609 A1 lehrt eine hintere Konsolenbox für ein Fahrzeug, wobei das Fahrzeug einen Boden, Sitzreihen auf dem Boden und einen Gang zwischen den Sitzreihen umfasst. Die hintere Konsolenbox ist dabei in dem Gang angeordnet und umfasst ein Konsolenkastenkörper; ein Scharnier, das konfiguriert ist, um den Konsolenkastenkörper in Bezug auf den Boden zu verbinden und dadurch zu ermöglichen, dass der Konsolenkastenkörper zwischen einer horizontalen Position und einer angehobenen Position schwenkt, wobei die horizontale Position im Gang liegt und im Wesentlichen horizontal in Bezug auf den Boden ist, wobei der angehobene Position außerhalb des Ganges und vor dem Gang liegt; und ein Stützelement, das konfiguriert ist, um sich zwischen dem Konsolenkastenkörper und dem Boden zu erstrecken, wobei das Stützelement den Konsolenkastenkörper trägt und dadurch die angehobene Position des Konsolenkastenkörpers hält.

Die US 2008/315606 A1 lehrt eine Konsolenanordnung, die zur Verwendung in einem Beifahrersitzbereich eines Fahrzeugs konfiguriert ist, wobei die Konsolenanordnung Folgendes umfasst: ein unteres Konsolenmodul mit einem Gehäuse, das sich im Allgemeinen horizontal erstreckt und neben einem Boden des Beifahrersitzbereichs angeordnet ist; und ein oberes Konsolenmodul mit einem Gehäuse, das neben dem unteren Konsolenmodul angeordnet und betriebsmäßig mit dem unteren Konsolenmodul zwischen einer ersten Position und mindestens einer zweiten Position verbunden und relativ dazu beweglich ist; wobei eine oder mehrere Paneele(n) schwenkbar mit dem oberen Konsolenmodul verbunden sind, das zwischen mindestens einer zusammengefahrenen Position, die neben dem oberen Konsolenmodulgehäuse angeordnet ist, und einer ausgefahrenen Position einstellbar ist, wobei die eine oder die mehreren Paneele(n) eine Präsentationsfläche zur Verwendung im Beifahrersitzbereich des bilden Fahrzeug.

Aus der DE 20 2014 103 266 U1 ist eine verstellbare Konsole für den Innenraum eines Kraftfahrzeuges bekannt mit zumindest einer Sitzfläche Die Konsole weist zwei Trägerelemente, die mit der Karosserie des Fahrzeuges beweglich verbunden sind auf, so dass die Trägerelemente zwischen einer Gebrauchsposition und einer Verstauposition bewegbar sind, wobei beide Trägerelemente in der Gebrauchsposition ein gemeinsames Ablageelement ausbilden, das in einer erhöhten Position zur Sitzfläche angeordnet ist.

Die JP 2005 297826 A lehrt, dass im Fahrgastraum eines Fahrzeugs mit Vordersitzen und Rücksitzen auf dem Boden zwischen den Vordersitzen ein verfahrbahrer Konsolenkasten installiert ist. Der Konsolenkasten hat ein Stützelement, dessen eines Ende schwenkbar an der Seite des Bodens befestigt ist und dessen anderes Ende schwenkbar vom Konsolenkasten getragen wird.

In einem Informationsblatt zur Konzept-Studie Pikes Peak quattro von Audi, die auf der North American International Motor Show 2003 präsentiert wurde, wird eine zwischen den Einzelsitzen einer zweiten Sitzreihe absenkbare und versenkbare hintere Mittelkonsole ohne weitere Details erwähnt.

Die JP 2002 019530 A offenbart eine zwischen einem Fahrersitz und einem Beifahrersitz installierte Konsolenbox: Ein Aufbewahrungsteil zur Aufnahme des Konsolenkastenkörpers ist unter einem Armaturenbrett ausgebildet, Führungsschienen sind auf einer Bodenfläche von dem Aufbewahrungsteil zumindest zu einem Raum zwischen dem Fahrersitz und dem Beifahrersitz verlegt und der Konsolenkastenkörper ist beweglich und schwenkbar auf der Führungsschiene montiert. Der Konsolenkastenkörper ist in dem Aufbewahrungsteil unter der Instrumententafel aufbewahrt, um einen Durchgang zwischen dem Fahrersitz und dem Beifahrersitz zu sichern, so dass die Bewegung von dem Vordersitz zu dem Rücksitz und der die Bewegung vom Rücksitz zum Vordersitz erleichtert werden kann und der Konsolenkastenkörper nach hinten bewegt wird, um vom Rücksitz aus verwendet zu werden.

Die US 2003/234550 A1 offenbart ein Kraftfahrzeug mit einer Mittelkonsole nach dem Oberbegriff von Anspruch 1, sowie ein Verfahren und eine Vorrichtung zum Neupositionieren einer Anzeigevorrichtung im Fahrgastraum eines Fahrzeugs. Das Verfahren und die Vorrichtung umfassen das Sichern der Anzeigevorrichtung an einer Konsolenanordnung, wobei die Konsolenanordnung dazu konfiguriert ist, die Anzeigevorrichtung zum Betrachten einzusetzen und die Anzeigevorrichtung zu verstauen, wenn sie nicht verwendet wird. Die Konsolenanordnung ist an einer Bewegungsanordnung montiert. Die Bewegungsanordnung ist konfiguriert, um eine Verschiebung der Konsolenanordnung innerhalb des Fahrgastraums zwischen einem vorderen und einem hinteren Abschnitt des Fahrgastraums zu ermöglichen, wobei die Anzeigevorrichtung von dem vorderen und hinteren Abschnitt sichtbar ist. Die Konsolenanordnung umfasst mindestens zwei Abschnitte, die in der Vorne-Hinten-Richtung des Fahrzeugs unabhängig voneinander bewegbar und verschiebbar sind. Einer der beiden Abschnitte umfasst eine schwenkbar einziehbare Armlehne.

Die aus dem Stand der Technik bekannten Anordnungen und das daraus jeweils ableitbare Verfahren, eine starre Mittelkonsole aus dem Bereich zwischen zwei Fahrzeugsitzen an eine andere Position im Fahrzeuginnenraum zu verfahren, kann nur bei Kraftfahrzeugen mit einem ausreichend großen, selbst besonders großen Fahrzeuginnenraum angewendet werden. Ein Absenken oder Versenken von starr konzipierten Mittelkonsolen in den Fahrzeugboden hinein wäre aufgrund eines im Verhältnis zu deren Höhe schmalen herkömmlichen Fahrzeugbodens nicht möglich, insbesondere bei Elektrokraftfahrzeugen, deren Fahrzeugboden bevorzugt für Batterien vorgesehen ist.

Die Aufgabe der Erfindung ist es, das gattungsgemäße Kraftfahrzeug mit einer Mittelkonsole derart weiterzuentwickeln, dass die Nachteile des Stands der Technik überwunden werden. Dabei soll ein Drehen mindestens eines Fahrzeugsitzes bei kleinen Fahrzeuginnenräumen und in einer für Fahrzeuginsassen eleganten Ausführung ermöglicht werden.

Diese Aufgabe wird erfindungsgemäß gelöst durch die Merkmale des Kennzeichens von Anspruch 1. Bevorzugte erfindungsgemäße Mittelkonsolen sind in den Ansprüchen 2 bis 8 beschrieben.

Erste Ausführungsbeispiele einer Mittelkonsole betreffen eine Mittelkonsole mit mindestens einer Ablagefläche zwischen zwei Sitzen in einem Kraftfahrzeug, die aus einem ersten Verwendungszustand an einer ersten Position in einen zweiten Verwendungszustand an einer zweiten Position bewegbar ist, wobei sich die Lage der mindestens einen Ablagefläche zwischen dem ersten Verwendungszustand und dem zweiten Verwendungszustand ändert und die Mittelkonsole im zweiten Verwendungszustand zwischen den Sitzen einen Freiraum lässt, wobei die mindestens eine Ablagefläche beim Verfahren der Mittelkonsole zum Armaturenbrett aus einer ersten, insbesondere horizontalen, Lage im ersten Verwendungszustand in eine zweite, insbesondere aufgestellte fast vertikale, Lage im zweiten Verwendungszustand geklappt wird.

Der Begriff "geklappt" oder "das Klappen" beim Verfahren der Mittelkonsole aus einer ersten Lage in eine zweite Lage bezieht sich auf jegliche mögliche Bewegung oder Kombination von Bewegungen der Mittelkonsole, wobei dabei translatorische Bewegungen entlang einer oder mehrerer Richtungen und rotatorische Bewegungen um eine oder mehrere Achsen miteinander kombinieren werden können. Dabei wird das Klappen aus der ersten Lage in die zweite Lage mittels einer Drehung um eine Transversalachse ausgeführt. Die Transversalachse bezeichnet dabei eine Achse, die im Wesentlichen senkrecht zu einer translatorischen Bewegungsrichtung beim Verfahren der Mittelkonsole ausgerichtet ist. Beispielsweise ist die Translationsachse senkrecht zur Fahrzeuglängsachse ausgerichtet. Hierbei können das Verfahren der Mittelkonsole und die Drehung der Mittelkonsole gleichzeitig stattfinden.

Dabei wird die Mittelkonsole von der ersten Position in die zweite Position und umgekehrt entlang einer Schiene mittels eines Aktuators, insbesondere eines Linearmotors und/oder einer durch einen Elektromotor angetriebenen Schubkette oder Gewindespindel oder eines angetriebenen Riemens, verfahren, wobei vorzugsweise die Schiene in Fahrzeuglängsrichtung zumindest zwischen den Sitzen zum Armaturenbrett angeordnet ist und/oder eine Stromführung zur Mittelkonsole umfasst.

Dabei ist bevorzugt, dass die mindestens eine Ablagefläche aus der ersten Lage in die zweite Lage mittels eines Aktuators oder bei Kontakt der Mittelkonsole mit dem Armaturenbrett mittels einer Rampe am Armaturenbrett geklappt wird.

Zudem wird vorgeschlagen, dass die mindestens eine Ablagefläche einen Touchscreen oder Monitor und/oder ein Bedienfeld, insbesondere ein Schalterbedienfeld, aufweist.

Im ersten Verwendungszustand kann ein Arm eines Fahrzeuginsassen auf der mindestens einen Ablagefläche abgelegt werden und der Touchscreen und/oder das Bedienfeld mit dem abgelegten Arm bedient werden und im zweiten Verwendungszustand befindet sich der Touchscreen oder der Monitor zumindest im peripheren Sichtfeld eines Fahrzeuginsassen beim Blick auf das Armaturenbrett.

Im ersten Verwendungszustand lässt sich der Touchscreen komfortabel mit abgelegtem Arm bedienen, beispielsweise zur Zieleingabe in ein Navigationssystem und im zweiten Verwendungszustand dient derselbe Touchscreen als praktische Informationsanzeige im Sichtfeld des Fahrzeuginsassen, beispielsweise als Kartenanzeige mit Zielführung des Navigationssystems. Dadurch erfüllt der Touchscreen nicht nur mehrere Funktionen, sondern jede Funktion kann vorteilhafterweise in einer der Funktion dienlichen Lage ausgeführt werden. Die Mittelkonsole, insbesondere die mindestens eine Ablagefläche, ist im zweiten Verwendungszustand im Armaturenbrett zumindest teilweise integriert und/oder an die Kontur des Armaturenbretts angepasst.

Ein teilweises Integrieren der Ablagefläche im Armaturenbrett kann auf elegante Weise den Eindruck erzeugen, dass eine Mittelkonsole nicht lediglich als hinderlicher Gegenstand zwischen zwei Sitzen an eine andere Position verfahren wird, sondern sogar gegensätzlich ein dienlicher Teil des Armaturenbretts ist.

Erfindungsgemäß weist die Mittelkonsole eine Basis, eine Säule, einen Vorsprung und ein Drehgelenk aus, wobei die Basis und die Säule über das Drehgelenk verbunden sind und die Säule und der Vorsprung eine Einheit bilden oder die Basis und die Säule eine Einheit bilden und die Säule und der Vorsprung über das Drehgelenk verbunden sind, wobei vorzugsweise der Vorsprung die mindestens eine Ablagefläche aufweist.

Erfindungsgemäß ist die Drehachse des Drehpunkts quer zur Längsachse der Säule und quer zum Verlauf der Schiene angeordnet und vorzugsweise verläuft die Drehachse durch den Schwerpunkt der Mittelkonsole.

Ferner kann eine Mittelkonsole gekennzeichnet sein durch ein Energiespeichersystem, beispielsweise eine Rückstellfeder, die Bewegungsenergie bei der Änderung der Mittelkonsole aus dem ersten Verwendungszustand in den zweiten Verwendungszustand speichert und die gespeicherte Energie zur Zustandsänderung der Mittelkonsole vom zweiten Verwendungszustand zurück in den ersten Verwendungszustand nutzt.

Zudem kann eine Mittelkonsole gekennzeichnet sein durch ein Arretierungssystem, insbesondere ein elektromagnetisches Arretierungssystem, das die gespeicherte Energie des Energiespeichersystems einbehalten und freigeben kann.

Dabei lässt die Mittelkonsole im zweiten Verwendungszustand zwischen den Sitzen den Freiraum, dass zumindest einer der Sitze um zumindest 45°, vorzugsweise zumindest 90°, um seine Längsachse senkrecht zum Fahrzeugboden an der Mittelkonsole vorbei bewegbar ist. Somit kann das Fahrzeuginnere unbehindert von der Mittelkonsole einfach mittels Drehen der Sitze umgestaltet werden.

Die ersten Ausführungsbeispiele der Mittelkonsole ermöglichen ein Verfahren zum Drehen mindestens eines Sitzes in einem Kraftfahrzeug mit einer neben dem Sitz angeordneten Mittelkonsole, wobei vor oder während des Drehens des Sitzes die Mittelkonsole aus einer ersten Position an eine zweite Position so bewegt wird und dabei die Lage mindestens einer Ablagefläche der Mittelkonsole so geändert wird, dass die Mittelkonsole das Drehen des Sitzes nicht behindert und Sitz und Mittelkonsole aneinander vorbei bewegt werden können.

Dabei wird vorgeschlagen, dass die Lage der mindestens einen Ablagefläche durch ein Umklappen oder Hochklappen während der Bewegung der Mittelkonsole zum Armaturenbrett verändert wird, insbesondere mittels Bewegen der mindestens einen Ablagefläche entlang einer Rampe auf dem Armaturenbrett.

Somit wird ermöglicht, dass ein Teil der Funktionen, wie beispielsweise das Bedienen von Bedienelementen auch weiterhin möglich ist, wenn die Mittelkonsole sich nicht neben einem Fahrzeugsitz befindet, um nicht ein Drehen des Fahrzeugsitzes zu behindern.

Zweite Ausführungsbeispiele einer Mittelkonsole betreffen eine Mittelkonsole zwischen zwei Sitzen in einem Kraftfahrzeug, die aus einem ersten Verwendungszustand an einer ersten Position in einen zweiten, einen Verstauzustand darstellenden Verwendungszustand an einer zweiten Position bewegbar ist, wobei sich das Volumen der Mittelkonsole zwischen dem Verwendungszustand und dem Verstauzustand ändert und die Mittelkonsole im Verstauzustand zwischen den Sitzen einen Freiraum lässt, mit mindestens einem Hebemechanismus zum Absenken und Anheben zwecks Wechsel zwischen Verwendungszustand und Verstauzustand der Mittelkonsole.

Dabei kann die Mittelkonsole dadurch gekennzeichnet sein, dass der mindestens eine Hebemechanismus mindestens einen, insbesondere zwei symmetrisch gegenüberliegende, Kniehebel oder mindestens einen Scherenhebel und/oder mindestens einen Bowdenzug und/oder mindestens einen Linearaktuator, insbesondere in Form eines elektromechanischen Hubzylinders oder eines Pneumatikzylinders, umfasst.

Ein Hebemechanismus bietet den Vorteil, dass sich eine Armablage der Mittelkonsole individuell an einen und von einem Fahrzeuginsassen anpassen lässt. Insbesondere ein Mechanismus mit Kniehebel erweist sich als vorteilhaft, da ein Anheben aus einer abgesenkten Stellung zunächst zügig erfolgt und mit zunehmender Streckung des Kniehebels langsamer aber mit zunehmender Kraft vollzieht, so dass das einer feinen Anpassung der Armablage mit aufliegendem Arm zugutekommt.

Der Begriff "Volumen der Mittelkonsole" schließt dabei das gesamte Volumen der Mittelkonsole unterhalb ihrer Oberfläche inklusive des Hebemechanismus mit ein.

Erfindungsgemäß wird die Mittelkonsole von der ersten Position in die zweite Position und umgekehrt entlang einer Schiene mittels eines Aktuators, insbesondere eines Linearmotors und/oder einer durch einen Elektromotor angetriebenen Schubkette oder Gewindespindel oder eines angetriebenen Riemens, verfahren.

Bevorzugt ist dabei vorgesehen, dass die Schiene in Fahrzeuglängsrichtung zumindest zwischen den Sitzen zu einer Position unterhalb eines Armaturenbretts angeordnet ist und/oder eine Stromführung zur Mittelkonsole umfasst.

Ferner wird vorgeschlagen, dass die Mittelkonsole im Verstauzustand in einem Armaturenbrett zumindest teilweise integriert ist und/oder an die Kontur des Armaturenbretts angepasst ist.

Weiterhin wird vorgeschlagen, dass die zweite Position unterhalb eines Armaturenbretts und/oder innerhalb einer Garage angeordnet ist, wobei sich die Mittelkonsole im Verstauzustand zumindest teilweise innerhalb der Garage befindet, wobei vorzugsweise die Garage im Armaturenbrett zumindest teilweise integriert ist und/oder an die Kontur des Armaturenbretts angepasst ist und/oder eine, insbesondere richtungsunabhängig öffnende und selbstverschließende, Klappe umfasst. Die Garage bezeichnet dabei einen Verstauraum für die Mittelkonsole.

Ein teilweises Integrieren der Mittelkonsole im Armaturenbrett kann auf elegante Weise den Eindruck erzeugen, dass eine Mittelkonsole nicht lediglich als hinderlicher Gegenstand zwischen zwei Sitzen an eine andere Position verfahren wird, sondern sogar gegensätzlich ein dienlicher Teil des Armaturenbretts ist. Beispielsweise bietet die Mittelkonsole im Verstauzustand, insbesondere innerhalb einer Garage, zusätzlichen Schutz für die in einem Staufach der Mittelkonsole abgelegten Gegenstände.

Alternative Mittelkonsolen können gekennzeichnet sein durch eine Abdeckung, insbesondere mit Führungsschienen, die die Mittelkonsole umhüllt und/oder ein auswechselbares Staufach.

Erfindungsgemäß lässt die Mittelkonsole im zweiten Verstauzustand zwischen den Sitzen den Freiraum, dass zumindest einer der Sitze um zumindest 45°, vorzugsweise zumindest 90°, um seine Längsachse senkrecht zum Fahrzeugboden an der Mittelkonsole vorbei bewegbar ist. Somit kann das Fahrzeuginnere unbehindert von der Mittelkonsole einfach mittels Drehen der Sitze umgestaltet werden.

Die zweiten Ausführungsbeispiele der Mittelkonsole ermöglichen ein Verfahren zum Drehen mindestens eines Sitzes in einem Kraftfahrzeug mit einer neben dem Sitz angeordneten Mittelkonsole nach einem der vorangehenden Ansprüche, wobei vor oder während des Drehens des Sitzes die Mittelkonsole aus einer ersten Position an eine zweite Position so weit bewegt wird und dabei deren Volumen so ändert, dass die Mittelkonsole das Drehen des Sitzes nicht behindert und Sitz und Mittelkonsole aneinander vorbei bewegt werden können. Dabei kann vorgesehen sein, dass durch Absenken und Anheben mittels eines Hebemechanismus das Volumen der Mittelkonsole geändert wird.

Daher wird ermöglicht, dass ein ansonsten ungenutzter Freiraum unter einem Armaturenbrett zum Verstauen der Mittelkonsole verwendet wird und kein anderweitig nutzbarer Fahrzeuginnenraumbereich freigehalten oder beansprucht werden muss, um nicht ein Drehen eines neben der Mittelkonsole befindlichen Fahrzeugsitzes zu behindern.

Dritte Ausführungsbeispiele einer Mittelkonsole betreffen eine Mittelkonsole zwischen zwei Sitzen in einem Kraftfahrzeug, die über einen Klapp- oder Faltmechanismus von einer ersten, aufrechten Position, die einen ersten Verwendungszustand bestimmt, in eine zweite, zusammengeklappte oder zusammengefaltete Position, die einen zweiten Verwendungszustand bestimmt, bewegbar ist, wobei die Mittelkonsole in der zweiten Position relativ zu einer Bodenoberfläche zwischen den Sitzen abgesenkt ist, wobei die Mittelkonsole in der zweiten Position im Wesentlichen parallel zu der Bodenoberfläche und/oder in einer flachen Stellung innerhalb einer Aussparung im Fahrzeugboden angeordnet ist.

Bevorzugt ist dabei wiederum, dass die Mittelkonsole in der Aussparung im Fahrzeugboden von mindestens einer, vorzugsweise verfahrbaren, Abdeckplatte abdeckbar ist.

Mittelkonsolen können zudem gekennzeichnet sein durch fünf Elemente, umfassend ein Mittelelement, das in der ersten, aufrechten Position im Wesentlichen parallel zu der Bodenoberfläche verläuft, zwei Endelemente, die in der ersten, aufrechten Position im Wesentlichen parallel zu der Bodenoberfläche verlaufen und/oder in die Bodenoberfläche zumindest teilweise abgesenkt sind, und zwei Seitenelemente zwischen den Endelementen und dem Mittelelement.

Ferner wird vorgeschlagen, dass die Mittelkonsole einen symmetrischen Aufbau relativ zu ihrer Längsachs senkrecht zu der Bodenoberfläche und senkrecht zur Fahrzeuglängsachse hat.

Ausführungsformen der können gekennzeichnet sein durch mindestens ein Anschlagselement zur Definition der ersten, aufrechten Position und/oder einer maximale Aufstellhöhe der Mittelkonsole, wobei vorzugsweise eines der fünf Elemente das Anschlagselement umfasst oder mit demselben, insbesondere beweglich, verbunden ist.

Des Weiteren wird vorgeschlagen, dass die Elemente relativ zueinander bewegbar verbunden sind, insbesondere durch auf gegenüberliegenden Seiten angeordnete Drehachsen und/oder Scharniere, wobei vorzugsweise die Elemente starr sind.

Dabei kann vorgesehen sein, dass die Endelemente der starren Elemente zum Wechsel von der ersten Position in die zweite Position auseinanderziehbar und zum Wechsel von der zweiten Position in die erste Position zusammendrückbar sind.

Mittelkonsolen können auch gekennzeichnet sein durch zumindest einen Aktuator zum translativen Verschieben mindestens eines der Endelement der Mittelkonsole zwecks Wechsel zwischen der ersten und zweiten Position der Mittelkonsole, wobei vorzugsweise der Aktuator einen Linearmotor und/oder eine durch einen Elektromotor angetriebene Gewindespindel oder Schubkette umfasst.

Ferner wird vorgeschlagen, dass die Elemente einen Klapp- oder Faltmechanismus mit Lammelenstruktur aufweisen, wobei vorzugsweise die Seitenelemente die Lammelenstruktur aufweisen.

Alternative Mittelkonsolen können gekennzeichnet sein durch mindestens einen Hubzylinder zum Absenken und Aufrichten zwecks Wechsel zwischen der ersten und zweiten Position der Mittelkonsole, wobei vorzugsweise der Hubzylinder einen elektromechanischen Hubzylinder, einen Pneumatikzylinder oder einen Hydraulikzylinder umfasst, und/oder vorzugsweise der Hubzylinder an das Mittelelement angreift oder mit demselben verbunden ist.

Bevorzugt sind Mittelkonsolen gekennzeichnet durch ein selbsthemmendes System, insbesondere umfassend ein untersetztes Getriebe, so dass eine auf die Mittelkonsole ausgeübte externe Kraft kein Absenken oder Aufrichten der Mittelkonsole bewirkt.

Ferner kann eine Mittelkonsole nach gekennzeichnet sein durch einen elastischen Oberflächenbezug, insbesondere auf zumindest einen Teil der Elemente gespannt, und/oder mindestens einen Touchscreen, insbesondere auf dem Mittelelement, und/oder mindestens eine Ablagefixierung, die beim Bewegen der Mittelkonsole darauf abgelegte Gegenstände, insbesondere innerhalb der Mittelkonsole, fixiert. Eine Ablagefixierung kann beispielsweise eine elastische Oberfläche der Mittelkonsole darstellen, die im Flachzustand dafür sorgt, dass nichts herausfällt.

In einer Ausführungsform ist die Mittelkonsole in der zweiten, zusammengefalteten Position relativ zu einer Bodenoberfläche zwischen den Sitzen so abgesenkt, dass zumindest einer der Sitze um zumindest 45°, vorzugsweise zumindest 90°, um seine Längsachse senkrecht zu der Bodenoberfläche an der Mittelkonsole vorbei bewegbar ist. Somit kann das Fahrzeuginnere unbehindert von der Mittelkonsole einfach mittels Drehen der Sitze umgestaltet werden.

Die dritten Ausführungsbeispiele der Mittelkonsole ermöglichen ein Verfahren zum Drehen mindestens eines Sitzes in einem Kraftfahrzeug mit einer neben dem Sitz angeordneten Mittelkonsole, wobei vor oder während des Drehens des Sitzes die Mittelkonsole zumindest so weit abgesenkt wird, dass die Mittelkonsole das Drehen des Sitzes nicht behindert und Sitz und Mittelkonsole aneinander vorbei bewegt werden können.

Also ist gewährleistet, dass kein Fahrzeuginnenraumbereich freigehalten oder beansprucht werden muss, um nicht ein Drehen eines neben der Mittelkonsole befindlichen Fahrzeugsitzes zu behindern.

Die Erfindung und deren bevorzugte Ausführungsformen werden nachfolgend beispielhaft anhand schematischer Zeichnungen näher erläutert:
- Figur 1a: zeigt einen Fahrzeuginnenraum eines erfindungsgemäßen Kraftfahrzeugs mit einer ersten Ausführungsform einer Mittelkonsole in einem ersten Verwendungszustand neben einem Sitz;
- Figur 1b: zeigt wie in Figur 1a den Fahrzeuginnenraum mit der Mittelkonsole in einem zweiten Verwendungszustand vor einem Armaturenbrett;
- Figur 2a: zeigt einen Fahrzeuginnenraum eines erfindungsgemäßen Kraftfahrzeugs mit einer zweiten Ausführungsform einer Mittelkonsole in einem ersten Verwendungszustand neben einem Sitz;
- Figur 2b: zeigt wie in Figur 2a den Fahrzeuginnenraum mit der Mittelkonsole in einem zweiten Verwendungszustand vor einem Armaturenbrett;
- Figur 3a: zeigt einen Fahrzeuginnenraum mit einer dritten Ausführungsform einer Mittelkonsole in einer aufgerichteten Stellung an einer ersten Position neben einem Sitz;
- Figur 3b: zeigt wie in Figur 3a den Fahrzeuginnenraum mit der Mittelkonsole in einer abgesenkten Stellung an der ersten Position neben dem Sitz;
- Figur 3c: zeigt wie in Figur 3a und 3b den Fahrzeuginnenraum mit der Mittelkonsole in der abgesenkten Stellung an einer zweiten Position in einer Garage;
- Figur 4a: zeigt einen Fahrzeuginnenraum mit einer vierten Ausführungsform einer Mittelkonsole in einer aufgerichteten Stellung an einer ersten Position neben einem Sitz;
- Figur 4b: zeigt wie in Figur 4a den Fahrzeuginnenraum mit der Mittelkonsole in einer abgesenkten Stellung an einer zweiten Position in einer Garage;
- Figur 5: zeigt eine Kniehebelvorrichtung;
- Figur 6: zeigt eine perspektivische Ansicht der vieren Ausführungsform der Mittelkonsole wie in den Figuren 4a und 4b mit einer Schiene;
- Figur 7a: zeigt eine Schnittansicht der Mittelkonsole mit Schiene wie in Figur 6 mit der Kniehebelvorrichtung wie in Figur 5 in einer aufgerichteten Stellung;
- Figur 7b: zeigt eine Schnittansicht der Mittelkonsole mit Schiene wie in Figur 6 mit der Kniehebelvorrichtung wie in Figur 5 in einer abgesenkten Stellung;
- Figur 8a: zeigt eine perspektivische Ansicht einer fünften Ausführungsform einer Mittelkonsole mit einer Schiene;
- Figur 8b: zeigt eine perspektivische Ansicht einer sechsten Ausführungsform einer Mittelkonsole mit einer Schiene;
- Figur 9: zeigt einen Fahrzeuginnenraum mit einer Mittelkonsole in einer aufgerichteten Stellung zwischen zwei Sitzen;
- Figur 10: zeigt in Schnittansichten den Ablauf einer Stellungsänderung einer siebten Ausführungsform einer Mittelkonsole, zu drei Zeitpunkten; und
- Figur 11: zeigt in Schnittansichten wie in Figur 10 den Ablauf einer Stellungsänderung einer achten Ausführungsform einer Mittelkonsole, zu drei Zeitpunkten.

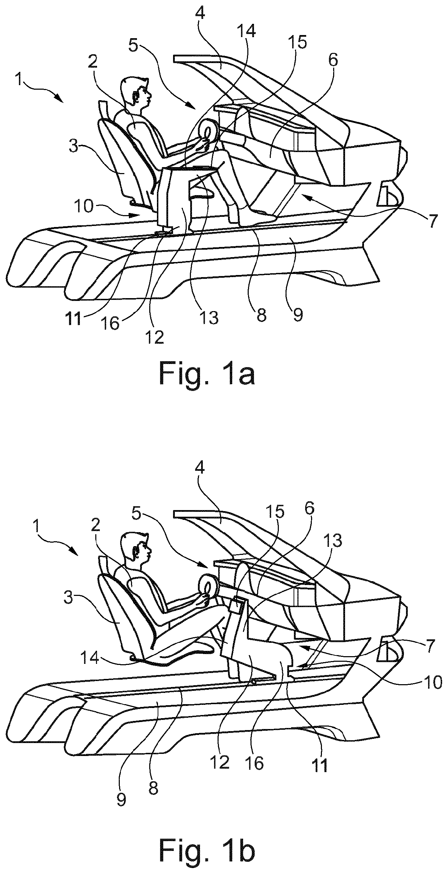

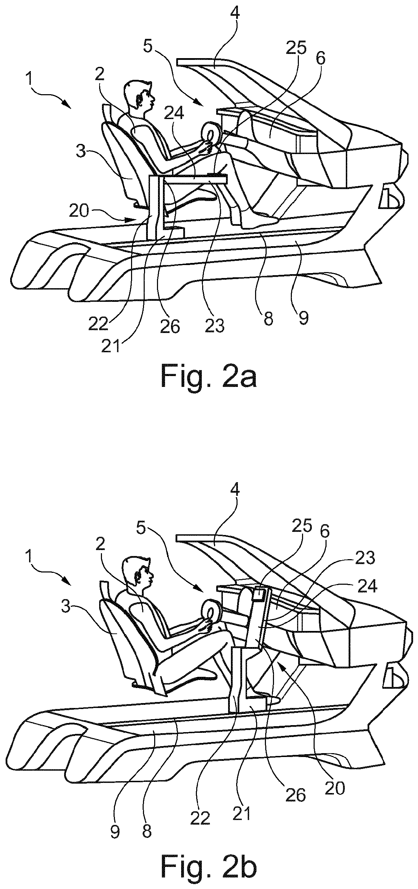

In den Figuren 1a und 1b sowie 2a und 2b ist aus einer perspektivischen Sicht ein Fahrzeuginnenraum 1 mit einem Fahrzeuginsassen 2 auf einem Sitz 3, insbesondere einem Fahrer auf einem Fahrersitz, sowie eine Windschutzscheibe 4 und ein Fahrzeugcockpit 5 mit Lenkrad und Armaturenbrett 6 zu sehen. Unterhalb des Armaturenbretts 6 befindet sich ein Freiraum 7. Ferner ist eine Schiene 8 im Fahrzeugboden 9 zu sehen, entlang dieser eine Mittelkonsole 10, 20 verfahren werden kann.

Die Figur 1a zeigt eine erste Ausführungsform einer verfahrbaren und klappbaren Mittelkonsole 10 in einem ersten Verwendungszustand, wobei die Mittelkonsole 10 eine aufrechte Stellung an einer ersten Position neben dem Fahrzeuginsassen 2 und dem Sitz 3 einnimmt. Die Mittelkonsole 10 weist eine Basis 11, eine Säule 12 und einen am oberen Ende der Säule 12 ausgehenden Vorsprung 13 auf. Der Vorsprung 13 bildet mit der Säule 12 eine feste Einheit und stellt eine Ablagefläche 14 in horizontaler Lage mit einem Touchscreen 15 bereit. Die Säule 12 ist mit der Basis 11 über ein Drehgelenk 16 verbunden, dessen Drehachse quer zur Längsachse der Säule 12 und quer zum Verlauf der Schiene 8 orientiert ist. Die Basis 11 ist mit einem nicht dargestellten aktiven Motorantrieb, beispielsweise einem sich im Fahrzeugboden 9 befindlichen Riemenantrieb, verbunden, über den die Mittelkonsole 10 von der Schiene 8 geführt verfahren werden kann.

In Figur 1b ist die Mittelkonsole 10 in einem zweiten Verwendungszustand vor dem Armaturenbrett 6 gezeigt. Die Mittelkonsole 10 nimmt eine umgeklappte Stellung ein, indem sich die Basis 11 an einer zweiten Position sowie ein Teil der Säule 12 in zum Fahrzeugboden 9 geneigter Haltung im Freiraum 7 unterhalb des Armaturenbretts 6 befinden. Durch die geneigte Haltung der Säule 12 ist der Vorsprung 13 in einer aufgerichteten Stellung, womit die Ablagefläche 14 sowie der Touchscreen 15 eine fast vertikalen Lage vor dem Armaturenbrett 6 einnehmen, in der der Touchscreen 15 vom Fahrzeuginsassen 2 bedient werden kann. Beim zweiten Verwendungszustand der Mittelkonsole 10 ergibt sich neben dem Sitz 3 ein Freiraum, der ein Drehen des Sitzes 3 ermöglicht.

Die Figur 2a zeigt eine zweite Ausführungsform einer verfahrbaren und klappbaren Mittelkonsole 20 in einem ersten Verwendungszustand, wobei die Mittelkonsole 20 eine aufrechte Stellung an einer ersten Position neben dem Fahrzeuginsassen 2 und dem Sitz 3 einnimmt. Die Mittelkonsole 20 weist eine Basis 21, eine Säule 22 und ein am oberen Ende der Säule 22 abstehenden Vorsprung 23 auf. Der Vorsprung 23 ist mit der Säule 22 über ein Drehgelenk 26, insbesondere ein Scharnier, verbunden und stellt eine Ablagefläche 24 in horizontaler Lage mit einem Touchscreen 25 bereit. Die Säule 22 und die Basis 21 bilden eine feste Einheit, wobei die Basis 21 entlang dem Verlauf der Schiene 8 breiter ausgebildet ist als die Säule 22. Ferner ist die Basis 21 mit einem nicht dargestellten aktiven Motorantrieb, beispielsweise einem sich im Fahrzeugboden 9 befindlichen Riemenantrieb, verbunden, über den die Mittelkonsole 20 von der Schiene 8 geführt verfahren werden kann.

In Figur 2b ist die Mittelkonsole 20 in einem zweiten Verwendungszustand vor dem Armaturenbrett 6 gezeigt. Der Vorsprung 23 nimmt dabei eine hochgeklappte Stellung vor dem Armaturenbrett 6 ein, wobei sich die Säule 22 und die Basis 21 an einer zweiten ans Armaturenbrett 9 rangefahrenen Position befinden. Dadurch sind zum einen die Ablagefläche 24 und der Touchscreen 25 in einer fast vertikalen Lage, in der der Touchscreen 25 vom Fahrzeuginsassen 2 bedient werden kann und zum anderen ergibt sich neben dem Sitz 3 ein Freiraum, der ein Drehen des Sitzes 3 ermöglicht.

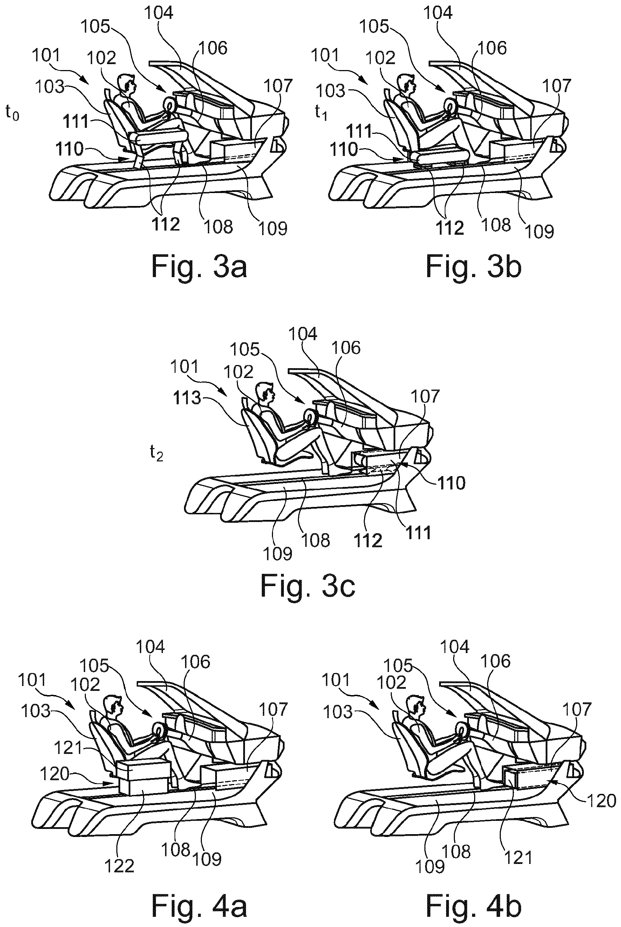

In den Figuren 3a bis 3c sowie 4a und 4b ist aus einer perspektivischen Sicht ein Fahrzeuginnenraum 101 mit einem Fahrzeuginsassen 102 auf einem Sitz 103, insbesondere einem Fahrer auf einem Fahrersitz, sowie eine Windschutzscheibe 104 und ein Fahrzeugcockpit 105 mit Lenkrad und Armaturenbrett 106 zu sehen. In einem Freiraum unterhalb des Armaturenbretts 106 befindet sich eine Garage 107, die eine Mittelkonsole 110, 120 aufnehmen kann, wobei die Mittelkonsole 110, 120 ein Staufach 111 und Kniehebel 112 aufweist. Ferner ist eine Schiene 108 im Fahrzeugboden 109 zu sehen, entlang dieser die Mittelkonsole 110, 120 verfahren werden kann.

Die Figuren 3a bis 3c zeigen einen Ablauf einer Zustandsänderung einer dritten Ausführungsform einer absenkbaren und verfahrbaren Mittelkonsole 110 aus einem Verwendungszustand in einen Verstauzustand zu drei verschiedenen Zeitpunkten t0, t1, t2. Zum Zeitpunkt t0, dargestellt in Figur 3a, ist die Mittelkonsole 110 im Verwendungszustand in einer aufgerichteten Stellung an einer ersten Position neben dem Fahrzeuginsassen 102 und dem Sitz 103. Dabei wird ein Staufach 111 der Mittelkonsole 110 von Kniehebeln 112 getragen, die sich in einem gesteckten Zustand befinden und frei sichtbar sind. Zum Zeitpunkt 11, dargestellt in Figur 3b, ist die Mittelkonsole 110 in einer abgesenkten Stellung an der ersten Position neben dem Sitz 103, wobei sich die Kniehebel 112 in einem gebeugten Zustand befinden. Dadurch ist das Staufach 111 abgesenkt und die Ausmaße der Mittelkonsole 110 nehmen ein im Vergleich zur aufgerichteten Stellung geringeres Volumen ein. Mittels eines nicht gezeigten Motorantriebs wird die Mittelkonsole 110 in der abgesenkten Stellung entlang der Schiene 108 im Fahrzeugboden 109 an eine zweite Position in die Garage 107 verfahren. Zum Zeitpunkt t2, dargestellt in Figur 3c, ist die Mittelkonsole 110 im Verstauzustand in der abgesenkten Stellung an der zweiten Position in der Garage 107, wodurch sich neben dem Sitz 103 ein Freiraum ergibt, der ein Drehen des Sitzes 103 ermöglicht.

Die Figuren 4a und 4b zeigen eine vierte Ausführungsform einer absenkbaren und verfahrbaren Mittelkonsole 120, wobei die vierte Ausführungsform zusätzlich zur dritten Ausführungsform der Mittelkonsole 110 eine Abdeckung aufweist. In Figur 4a ist die Mittelkonsole 120 im Verwendungszustand in einer aufgerichteten Stellung an einer ersten Position neben dem Fahrzeuginsassen 102 auf dem Sitz 103 zu sehen. Dabei umhüllt eine erste Abdeckung 121 das Staufach 111 und eine zweite Abdeckung 122 umhüllt die Kniehebel 112. Ferner umhüllt die erste Abdeckung 121 auch teilweise die zweite Abdeckung 122. In Figur 4b ist die Mittelkonsole 120 im Verstauzustand in einer abgesenkten Stellung an einer zweiten Position in der Garage 107 zu sehen. Die erste Abdeckung 121 umhüllt dabei vollständig die zweite Abdeckung 122. Neben dem Sitz 103 besteht, genauso wie in Figur 3c, ein Freiraum, der ein Drehen des Sitzes 103 ermöglicht.

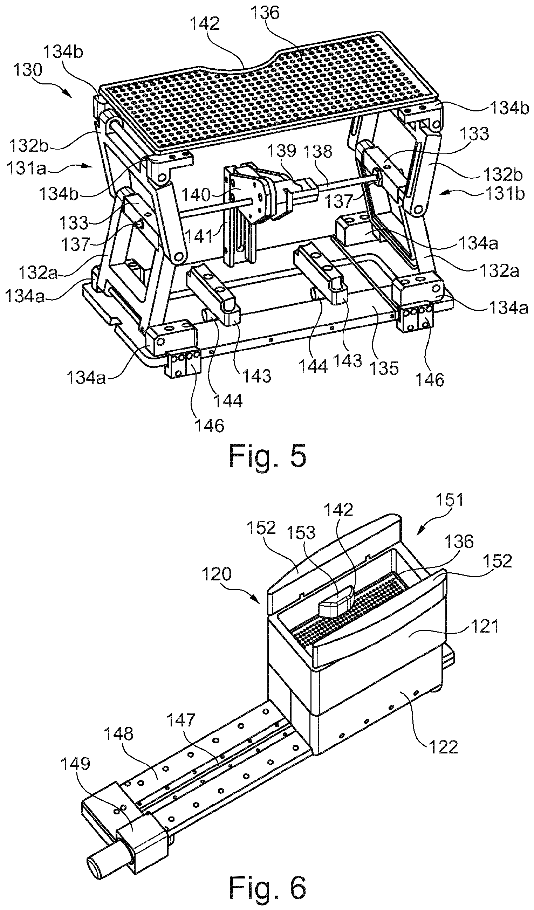

In Figur 5 ist eine Kniehebelvorrichtung 130 dargestellt, mittels welcher eine Mittelkonsole 120 abgesenkt und angehoben werden kann. Dabei stehen sich ein erster Kniehebel 131a und ein zweiter Kniehebel 131b spiegelsymmetrisch mit zugewandten Kniegelenken gegenüber. Jeder der Kniehebel 131a, 131b setzt sich aus einem ersten Hebelelement 132a und einem zweiten Hebelelement 132b zusammen. Die Hebelelemente 132a, 132b sind gabelförmig und weisen zwei Gabelbeine auf, die an einem Ende über eine Gabelbrücke verbunden geschlossen sind und am gegenüberliegenden Ende unverbunden offen sind. Das Kniegelenk eines Kniehebels 131a, 131b wird durch einen Gelenkbolzen 133 sowie die offenen Enden des ersten Hebelelements 132a und die offenen Enden des zweiten Hebelelements 132b gebildet, wobei der Gelenkbolzen 133 zwischen dem offenen Ende des ersten Hebelelements 132a eingefasst ist und das offene Ende des ersten Hebelelements 132a zusammen mit dem Gelenkbolzen 33 zwischen dem offenen Ende des zweiten Hebelelements 132b eingefasst ist und die jeweiligen nebeneinander befindlichen Gabelbeidn der Hebelelemente 132a, 132b mit dem Gelenkbolzen 133 in der Kniegelenkachse drehbar verbunden sind. Die geschlossenen Enden der ersten Hebelelemente 132a sind über erste Verbindungselemente 134a mit einer Grundplatte 135 drehbar verbunden und die geschlossenen Enden der zweiten Hebelelemente 132b sind über zweite Verbindungselemente 134b mit der Unterseite eines Staufachbodens 136 drehbar verbunden, so dass die Ebenen der Grundplatte 135 und des Staufachbodens 136 parallel zueinander stehen und die Kniehebel 131a, 131b zwischen der Grundplatte 135 und der Unterseite des Staufachbodens 136 angeordnet sind. Die jeweiligen Gelenkbolzen 133 weisen Gewindemuttern 137 auf, wobei die jeweiligen Gewinde der Gewindemuttern 137 zueinander gegenläufig sind. Die Gelenkbolzen 133 sind miteinander über eine Gewindespindel 138 verbunden, die zwei Abschnitte mit gegenläufigen Gewinden aufweist, die zu den jeweiligen Gewinden der Gewindemuttern 137 komplementär sind, so dass abhängig von der Rotationsrichtung der Gewindespindel 138 die Gelenkbolzen 133 aufeinander zu oder voneinander weg bewegt werden können. In Rotation wird die Gewindespindel 138 durch einen bei der Gewindespindel 138 angeordneten Motor 139 versetzt. Die Gewindespindel 138 sowie der Motor 139 sind über eine Halterung 140 mit einer Halterungsführung 141 verbunden, indem die Gewindespindel 138 durch ein Loch in der Halterung 140 hindurchläuft und der Motor 139 an der Halterung 140 befestigt ist. Die Halterungsführung 141 ist senkrecht auf der Grundplatte 135 angeordnet, wodurch die Halterung 140 mit der Gewindespindel 138 und dem Motor 139 absenkend und anhebend geführt wird.

Sobald der Motor 139 die Gewindespindel 138 derart in Rotation versetzt, dass die Gelenkbolzen 133 aufeinander zu bewegt werden, neigen sich die ersten Hebelelemente 132a relativ zur Grundplatte 135 aus einer aufgerichteten Stellung in eine geneigte Stellung. Dadurch wirkt auf die Gewindespindel 138 eine nach unten gerichtet Kraft, die die von der Gewindespindel 138 durchlaufene Halterung 140 an der Halterungsführung 141 entlang absenkt. Eine gegenläufige Rotation der Gewindespindel 138 führt umgekehrt dazu, dass die Gelenkbolzen 133 voneinander weg bewegt werden und sich die ersten Hebelelemente 132a aus einer relativ zur Grundplatte 135 geneigten Stellung in eine aufgerichtete Stellung aufrichten. Dadurch wirkt eine nach oben gerichtet Kraft auf die Gewindespindel 138, die die Halterung 140 an der Haltungsführung 141 entlang anhebt. Mit in Figur 5 nicht gezeigten Führungsschienen 155, die den Staufachboden 136 senkrecht zu dessen Ebene führen, werden bei einem Neigen oder Aufrichten der ersten Hebelelemente 131a die zweiten Hebelelemente 132a relativ zum Staufachboden geneigt oder aufgerichtet. Insgesamt kommt es bei einer Bewegung der Gelenkbolzen 133 aufeinander zu zu einer Beugung der Kniehebel 131a, 131b und der Staufachboden 136 senkt sich relativ zur Grundplatte 135 ab und umgekehrt kommt es bei einer Bewegung der Gelenkbolzen 133 voneinander weg zu einer Streckung der Kniehebel 131a, 131b und der Staufachboden 136 hebt sich relativ zur Grundplatte 135 an.

Der Staufachboden 136 weist eine Aussparung 142 auf, die die Halterungsführung 141 bei einem Absenken des Staufachbodens 136 durchlaufen kann. Die Grundplatte 135 weist im Platteninnenbereich eine Aussparung auf, über die mit der Oberseite der Grundplatte 135 verbundene Stege 143 angeordnet sind, an denen Riemenhalterungen 144 angebracht sind, die durch die Aussparung zur Unterseite der Grundplatte 135 ausgerichtet sind, so dass die Riemenhalterungen 144 an einen nicht gezeigten Riemen 147 unterhalb der Kniehebelvorrichtung 130 befestigt werden können. An den Seiten der Grundplatte 135 sind Führungselemente 146 für eine Bewegung entlang einer nicht gezeigten Schiene 148 angeordnet.

In Figur 6 ist die vierte Ausführungsform der Mittelkonsole 120 aus den Figuren 4a und 4b auf einer Schiene dargestellt, in der die Kniehebelvorrichtung 130 aus Figur 5 eingebaut ist. Ein Staufach 151 ist von der ersten Abdeckung 121 umhüllt und wird mit einem offenstehenden zweiteiligen Deckel 152 gezeigt. Im Staufach 151 ist der Staufachboden 136 zu sehen, wobei die Aussparung 142 des Staufachbodens 136 mit einer Aussparungsabdeckung 153 versehen ist. Bei einem Absenken der Mittelkonsole 120 nimmt die Aussparungsabdeckung 153 den Abschnitt der Halterungsführung 141 auf, der die Aussparung 142 durchläuft und vermeidet damit den Kontakt der Halterungsführung 141 mit im Staufach 151 befindlichen Gegenständen. Die zweite Abdeckung 122 umhüllt die Kniehebelvorrichtung 130 und ist teilweise von der ersten Abdeckung 121 umhüllt. Die Mittelkonsole 120 befindet sich auf einer Schiene 148, an deren Ende ein Antrieb 149 angebracht ist, der einen Riemen 147 antreibt. Der Riemen 147 bewegt sich in einer Aussparung in der Schiene 148 und kann so die an dem Riemen 147 befestigte Mittelkonsole 120 entlang der Schiene 148 verfahren.

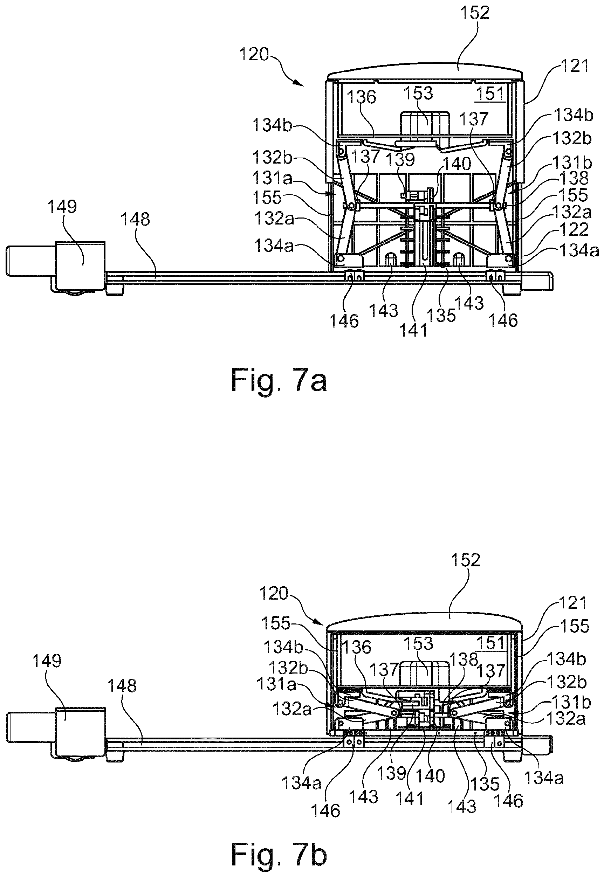

Eine Schnittansicht der in Figur 6 dargestellten vierten Ausführungsform der Mittelkonsole 120 mit Schiene 148 und Kniehebelvorrichtung 130 wird in Figur 7a in einer aufgerichteten Stellung und in Figur 7b in einer abgesenkten Stellung gezeigt. Dabei ist das Staufach 151 vom Deckel 153 verschlossen, der zusammen mit der ersten Abdeckung 121 und der zweiten Abdeckung 122 ein Gehäuse der Mittelkonsole 120 bildet. Die erste Abdeckung 121 und die zweite Abdeckung 122 weisen Führungsschienen 155 auf, mit denen beim Absenken der Mittelkonsole 120 die erste Abdeckung 121 über die zweite Abdeckung 122 geführt wird. Durch die Führungsschienen 155 und das Gehäuse wird zudem die Kniehebelvorrichtung 130 stabilisiert, indem der Staufachboden 136 mit den zweiten Verbindungselementen 134b und den damit verbundenen zweiten Hebelelementen 132b beim Absenken und Anheben der Mittelkonsole 120 entlang der Führungsschienen 155 geführt wird.

In der aufgerichteten Stellung, siehe Figur 7a, befinden sich der Motor 139 und die Halterung 140 sowie die Gewindespindel 138 am oberen Ende der Halterungsführung 141. Die Gelenkbolzen 133 befinden sich an den Enden der Gewindespindel 138, wodurch die Kniegelenke der spiegelsymmetrisch gegenüberliegenden Kniehebel 131a, 131b möglichst weit voneinander entfernt sind und die Kniehebel 131a, 131b einen gesteckten Zustand einnehmen. Im gesteckten Zustand weisen die ersten Hebelelemente 132a und die zweiten Hebelelemente 132b in der Kniebeuge zueinander einen Winkel kleiner 180° aus. Die erste Abdeckung 121 umhüllt das Staufach 151 und teilweise die zweite Abdeckung 122, die die Kniehebelvorrichtung 130 umhüllt.

In der abgesenkten Stellung, siehe Figur 7b, befinden sich der Motor 139 und die Halterung 140 sowie die Gewindespindel 138 am unteren Ende der Halterungsführung 141. Die Gelenkbolzen 133 befinden sich an der Mitte der Gewindespindel 138, wodurch die Kniegelenke der spiegelsymmetrisch gegenüberliegenden Kniehebel 131a, 131b möglichst nah beieinander sind und die Kniehebel 131a, 131b einen gebeugten Zustand einnehmen. Im gebeugten Zustand weisen die ersten Hebelelemente 132a und die zweiten Hebelelemente 132b in der Kniebeuge zueinander einen Winkel größer 0° aus. Zudem sind die erste Abdeckung 121 und die zweite Abdeckung 122 soweit ineinander verschoben, dass die erste Abdeckung 121 vollständig die zweite Abdeckung 122 umhüllt und beide Abdeckungen 121, 122 das Staufach 151 und die Kniehebelvorrichtung 130 vollständig umhüllen. Die Aussparungsabdeckung 153 nimmt den Abschnitt der Halterungsführung 141 auf, der die Aussprung 142 durchlaufen hat.

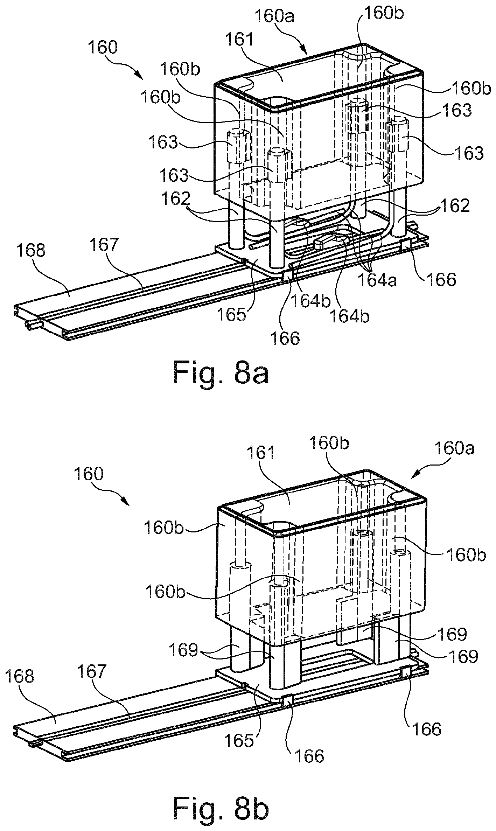

Die Figuren 8a und 8b zeigen eine fünfte und eine sechste Ausführungsform einer absenkbaren und verfahrbaren Mittelkonsole 160, die sich im Hebemechanismus voneinander unterscheiden. Die Mittelkonsole 160 weist eine quaderförmigen Box 160a auf, die oberseitig ein offenes Staufach 161 und an dessen seitlichen Ecken unterseitig offene Kanäle 160b aufweist. Ferner weist die Mittelkonsole eine Grundplatte 165 auf, die mittels Führungselementen 166 auf einer Schiene 168 geführt wird und über einen Riemen 167, der sich in einer Aussparung der Schiene 168 bewegt, entlang der Schiene 168 verfahrbar ist.

In der fünften Ausführungsform, siehe Figur 8a, sind Stangen 162 senkrecht auf der Grundplatte 165 angeordnet, die sich in die Kanäle 160b der Box 160a erstrecken. An den Stangen 162 befinden sich Schlittenelemente 163, die entlang der Stangen 162 gleiten können, wobei die Schlittenelemente 163 mittels Bowdenzügen 164a und Bowdenzugantrieben 164b bewegt werden. Die Schlittenelemente sind in den Kanälen 160b mit der Box 160a fest verbunden, so dass über die Bewegung der Schlittenelemente 163 die Box 160a und damit die Mittelkonsole 160 abgesenkt und angehoben werden kann.

In der sechsten Ausführungsform, siehe Figur 8b, sind Linearantriebe 169 senkrecht auf der Grundplatte 165 angeordnet, die sich in die Kanäle 160b der Box 160a erstrecken. Die Enden der Linearantriebe 169 sind mit der Box fest verbunden, so dass durch deren Bewegung die Box 160a und damit die Mittelkonsole 160 abgesenkt und angehoben werden kann.

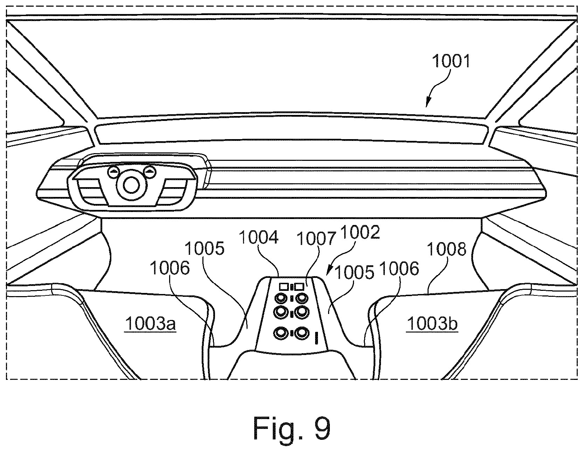

In Figur 9 ist ein vorderer Bereich eines Fahrzeuginnenraums 1001 aus Sicht eines hinteren Bereichs in Fahrtrichtung mit Blick auf eine Windschutzscheibe und ein Fahrzeugcockpit mit Lenkrad zu sehen. In einer vorderen Sitzreihe, bestehend aus einem ersten Sitz 1003a als Fahrersitz links und einem zweiten Sitz 1003b als Beifahrersitz rechts, befindet sich zwischen den Sitzen 1003a, 1003b eine klapp- oder faltbare Mittelkonsole 1002 in einer aufgerichteten Stellung. Die Mittelkonsole 1002 ist symmetrisch aufgebaut und setzt sich aus einem Mittelelement 1004, zwei Seitenelementen 1005 und zwei Endelementen 1006 zusammen, die miteinander verbunden sind. Die Endelemente 1006 nehmen eine flache Lage eben mit einer Bodenoberfläche 1008 des Fahrzeuginnenraums 1001 ein und gehen in die Seitenelemente 1005 über, die eine aufgerichtete Lage einnehmen und zwischen denen das Mittelelement 1004 parallel zur Bodenoberfläche 1008 in erhöhter Lage eingespannt ist. Das Mittelelement 1004 ist mit einem Touchscreen 1007 als Bedienelement ausgestaltet, der von Fahrzeuginsassen von den Sitzen 1003a, 1003b aus bedient werden kann.

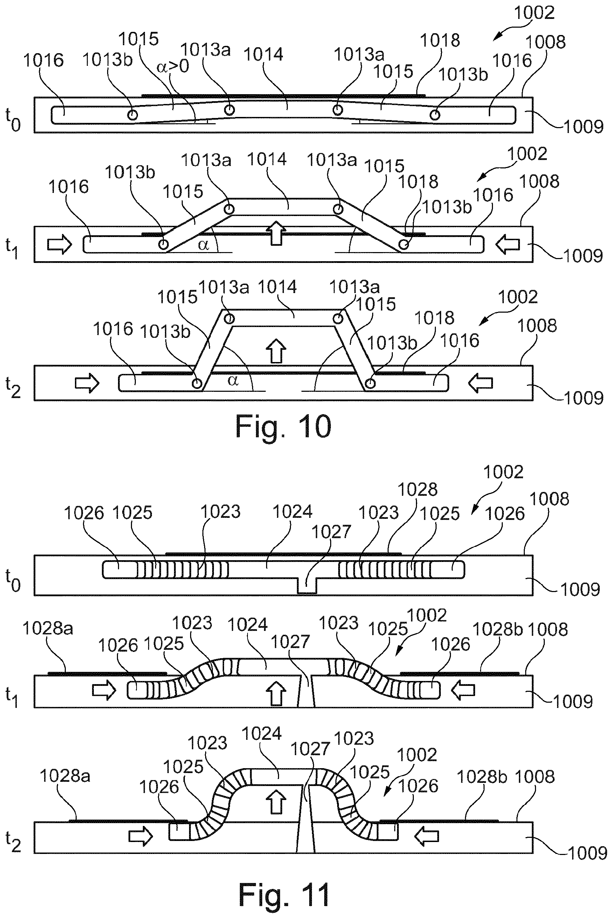

Eine siebte Ausführungsform der klappbaren oder faltbaren Mittelkonsole 1002 ist in Figur 10 zu drei verschiedenen Zeitpunkten t₀, t₁, t₂ beim Ablauf einer Stellungsänderung der Mittelkonsole 1002 dargestellt. Die Mittelkonsole 1002 ist symmetrisch aufgebaut und setzt sich aus einem Mittelelement 1014, zwei Seitenelementen 1015 und zwei Endelementen 1016 zusammen. Das Mittelelement 1014 ist an entgegengesetzten Seiten jeweils über eine erste Drehachse 1013a mit einem Seitenelement 1015 beweglich verbunden und die Seitenelemente 1015 sind jeweils an einer entgegengesetzt der Verbindung mit dem Mittelelement 1014 gelegenen Seite über eine zweite Drehachse 1013b mit einem Endelement 1016 beweglich verbunden. Bei der Stellungsänderung ändern sich der Aufstellwinkel α, der zwischen einem jeden Seitenelement 1015 und einer Ebene parallel zur Bodenoberfläche 1008 definiert ist, sowie die Höhe des Mittelelements 1014 im Bezug zur Bodenoberfläche 1008.

Zum Zeitpunkt t₀ befindet sich die Mittelkonsole 1002 in einer abgesenkten Stellung unterhalb der Bodenoberfläche 1008 in einer Aussparung eines Fahrzeugbodens 1009 und ist durch eine Abdeckplatte 1018 verdeckt. Der Aufstellwinkel α ist dabei größer Null, so dass nicht alle Elemente der Mittelkonsole 1002 flach und in derselben Ebene liegen. Die Stellungsänderung wird mittels nicht dargestellter Aktuatoren bewirkt, indem die beiden Endelemente 1016 zum Aufrichten der Mittelkonsole 1002 aufeinander zu und zum Absenken voneinander weg verschoben werden.

Vor einem Aufrichten der Mittelkonsole 1002 aus der abgesenkten Stellung, wie zum Zeitpunkt t₁ dargestellt, ist die Abdeckplatte 1018 bereits verschoben und die im Fahrzeugboden 1009 befindliche Mittelkonsole 1002 freigelegt. Bedingt durch den symmetrischen Aufbau der Mittelkonsole 1002, das zwischen den Seitenelementen 1015 eingespannte Mittelelement 1014 und einen initialen Aufstellwinkel α größer Null, richten sich beim Verschieben der Endelemente 1016 aufeinander zu die Seitenelemente 1015 auf und heben das Mittelelement 1014 an, wodurch die Mittelkonsole 1002 insgesamt aufgerichtet wird.

Zum Zeitpunkt t₂ wird durch nicht dargestellte Anschläge in den vier beweglichen Verbindungen an den Drehachsen 1013a, 1013b eine fortschreitende Stellungsänderung blockiert und damit eine maximale Aufstellhöhe der Mittelkonsole 1002 definiert sowie eine Rückmeldung an die Aktuatoren gegeben, das Verschieben der Endelemente 1016 zu stoppen. Die Endelemente 1016 verbleiben durchgehend bei allen Stellungen der Mittelkonsole 1002 innerhalb des Fahrzeugbodens 1009 in einer flachen Lage.

Eine achte Ausführungsform der klapp- oder faltbaren Mittelkonsole 1002 ist in Figur 11 dargestellt, die analog zu Figur 10 den Ablauf einer Stellungsänderung der Mittelkonsole 1002 aus einer abgesenkten Stellung zum Zeitpunkt t₀ über eine aufrichtende Stellung zum Zeitpunkt t₁ in eine aufgerichtete Stellung zum Zeitpunkt t₂ zeigt. Die Mittelkonsole 1002 ist symmetrisch aufgebaut und setzt sich aus einem Mittelelement 1024, zwei Seitenelementen 1025 und zwei Endelementen 1026 zusammen, wobei die Seitenelemente 1025 einen Klapp- oder Faltmechanismus mit Lamellenstruktur 1023 aufweisen. Das Mittelelement 1024 ist an entgegengesetzten Seiten jeweils mit einem Seitenelement 1025 verbunden und die Seitenelemente 1025 sind jeweils an einer entgegengesetzt der Verbindung mit dem Mittelelement 1024 gelegenen Seite mit einem Endelement 1026 verbunden.

In der abgesenkten Stellung zum Zeitpunkt t₀ befindet sich die Mittelkonsole 1002 unterhalb der Bodenoberfläche 1008 in einer Aussparung des Fahrzeugbodens 1009 und ist durch eine zweiteilige Abdeckplatte 1028 verdeckt. Alle Elemente der Mittelkonsole 1002 liegen flach in derselben Ebene, wobei sich unterhalb des Mittelelements 1024 ein Hubzylinder 1027 befindet. Vor einem Aufrichten der Mittelkonsole 1002 aus der abgesenkten Stellung werden, wie zum Zeitpunkt t₁ dargestellt, ein erster Abdeckplattenteil 1028a und ein zweiter Abdeckplattenteil 1028b der zweiteiligen Abdeckplatte 1028 entgegengesetzt voneinander weg verschoben und legen die im Fahrzeugboden 1009 befindliche Mittelkonsole 1002 frei. Das Aufrichten erfolgt durch Anheben des Mittelelements 1024 von unten durch den Hubzylinder 1027, wobei sich die Lamellenstruktur 1023 der Seitenelemente 1025 der Höhe anpassend faltet, so dass die Endelemente 1026 innerhalb des Fahrzeugbodens 1009 in einer flachen Lage mitgezogen und verschoben werden. Zum Zeitpunkt t₂ ist die maximale Aufstellhöhe der Mittelkonsole 1002 erreicht, bei der die Endelemente 1026 innerhalb des Fahrzeugbodens 1009 verbleiben.

### Bezugszeichenliste

- 1: Fahrzeuginnenraum
- 2: Fahrzeuginsasse
- 3: Sitz
- 4: Windschutzscheibe
- 5: Fahrzeugcockpit
- 6: Armaturenbrett
- 7: Freiraum
- 8: Schiene
- 9: Fahrzeugboden
- 10: Mittelkonsole
- 11: Basis
- 12: Säule
- 13: Vorsprung
- 14: Ablagefläche
- 15: Touchscreen
- 16: Drehgelenk
- 20: Mittelkonsole
- 21: Basis
- 22: Säule
- 23: Vorsprung
- 24: Ablagefläche
- 25: Touchscreen
- 26: Drehgelenk

- 101: Fahrzeuginnenraum
- 102: Fahrzeuginsasse
- 103: Sitz
- 104: Windschutzscheibe
- 105: Fahrzeugcockpit
- 106: Armaturenbrett
- 107: Garage
- 108: Schiene
- 109: Fahrzeugboden
- 110: Mittelkonsole
- 111: Staufach
- 112: Kniehebel
- 120: Mittelkonsole
- 121: erste Abdeckung
- 122: zweite Abdeckung
- 130: Kniehebelvorrichtung
- 131a: erster Kniehebel
- 131b: zweiter Kniehebel
- 132a: erstes Hebelelement
- 132b: zweites Hebelelement
- 133: Gelenkbolzen
- 134a: erstes Verbindungselement
- 134b: zweites Verbindungselement
- 135: Grundplatte
- 136: Staufachboden
- 137: Gewindemutter
- 138: Gewindespindel
- 139: Motor
- 140: Halterung
- 141: Halterungsführung
- 142: Aussparung
- 143: Steg
- 144: Riemenhalterung
- 146: Führungselement
- 147: Riemen
- 148: Schiene
- 149: Antrieb
- 151: Staufach
- 152: Deckel
- 153: Aussparungsabdeckung
- 155: Führungsschiene
- 160: Mittelkonsole
- 160a: Box
- 160b: Kanal
- 161: Staufach
- 162: Stab
- 163: Schlittenelement
- 164a: Bowdenzug
- 164b: Bowdenzugantrieb
- 165: Grundplatte
- 166: Führungselement
- 167: Riemen
- 168: Schiene
- 169: Linearaktuator

- 1001: Fahrzeuginnenraum
- 1002: Mittelkonsole
- 1003a: erster Sitz
- 1003b: zweiter Sitz
- 1004: Mittelelement
- 1005: Seitenelement
- 1006: Endelement
- 1007: Touchscreen
- 1008: Bodenoberfläche
- 1009: Fahrzeugboden
- 1013a: erste Drehachse
- 1013b: zweite Drehachse
- 1014: Mittelelement
- 1015: Seitenelement
- 1016: Endelement
- 1018: Abdeckplatte
- 1023: Lamellenstruktur
- 1024: Mittelelement
- 1025: Seitenelement
- 1026: Endelement
- 1027: Hubzylinder
- 1028: Abdeckplatte
- 1028a: erster Abdeckplattenteil
- 1028b: zweiter Abdeckplattenteil

- α: Aufstellwinkel

## Patentansprüche

1. Kraftfahrzeug mit einer Mittelkonsole (10, 20), die mit mindestens einer Ablagefläche (14, 24), einem Deckel, einem Monitor, einem Bedienfeld und/oder einem Touchscreen (15, 25) zwischen zwei Sitzen (3) in dem Kraftfahrzeug ausgestattet ist,
wobei die Mittelkonsole (10, 20) aus einem ersten Verwendungszustand an einer ersten Position in einen zweiten Verwendungszustand an einer zweiten Position bewegbar ist, wobei sich die Lage der Ablagefläche (14, 24), des Deckels, des Monitors, des Bedienfelds und/oder des Touchscreens (15, 25) zwischen dem ersten Verwendungszustand und dem zweiten Verwendungszustand ändert und die Mittelkonsole (10, 20) im zweiten Verwendungszustand zwischen den Sitzen (3) einen Freiraum lässt, und
wobei die Ablagefläche (14, 24), der Deckel, der Monitor, das Bedienfeld und/oder das Touchscreen (15, 25) beim Bewegen der Mittelkonsole (10, 20) aus einer ersten, im Wesentlichen horizontalen Lage im ersten Verwendungszustand in eine zweite, aufgestellte fast vertikale Lage im zweiten Verwendungszustand bewegbar ist,
wobei
die Mittelkonsole (10, 20) aus dem ersten Verwendungszustand in den zweiten Verwendungszustand durch Drehung um eine Transversalachse klappbar ist, wobei die Mittelkonsole (10, 20) eine Basis (11, 21), eine Säule (12, 22), einen Vorsprung (13, 23) und ein Drehgelenk (16, 26) aufweist, wobei
• die Basis (11) und die Säule (12) über das Drehgelenk (16) verbunden sind und die Säule (12) und der Vorsprung (13) eine Einheit bilden, oder
• die Basis (21) und die Säule (22) eine Einheit bilden und die Säule (22) und der Vorsprung (23) über das Drehgelenk (26) verbunden sind, und
die Drehachse des Drehpunkts des Drehgelenks (16, 26) quer zur Längsachse der Säule (12, 22) und quer zum Verlauf einer Schiene (8) angeordnet ist,
**dadurch gekennzeichnet dass**
die Mittelkonsole (10, 20) von der ersten Position in die zweite Position und umgekehrt entlang der Schiene (8) mittels eines ersten Aktuators zum Armaturenbrett (6) verfahrbar ist und die Mittelkonsole (10, 20) im zweiten Verwendungszustand zwischen den Sitzen (3) einen Freiraum lässt, so dass zumindest einer der Sitze (3) um zumindest 45°, oder zumindest 90° um seine Längsachse senkrecht zum Fahrzeugboden (9) an der Mittelkonsole (10, 20) vorbei bewegbar ist,
wobei der zweite Verwendungszustand ein Verstauzustand ist, in dem die Mittelkonsole (10, 20) im Armaturenbrett (6) zumindest teilweise integriert ist und/oder an die Kontur des Armaturenbretts (6) angepasst ist,
wobei im ersten Verwendungszustand ein Arm eines Fahrzeuginsassen auf der mindestens einen Ablagefläche (14, 24) abgelegt werden kann und das Touchscreen (15, 25) und/oder das Bedienfeld mit dem abgelegten Arm bedient werden kann, und
im zweiten Verwendungszustand das Touchscreen (15, 25), das Bedienfeld und/oder der Monitor sich zumindest im peripheren Sichtfeld eines Fahrzeuginsassen (2) beim Blick auf das Armaturenbrett (6) befindet.

2. Kraftfahrzeug nach Anspruch 1, **dadurch gekennzeichnet, dass**
der erste Aktuator in Form eines Linearmotors und/oder einer durch einen Elektromotor angetriebenen Schubkette oder Gewindespindel oder eines angetriebenen Riemens ausgeführt ist, und/oder
die Schiene (8) in Fahrzeuglängsrichtung zumindest zwischen den Sitzen (3) zum Armaturenbrett (6) angeordnet ist und/oder eine Stromführung zur Mittelkonsole (10, 20) umfasst.

3. Kraftfahrzeug nach einem der voranstehenden Ansprüche, **dadurch gekennzeichnet, dass** die Ablagefläche (14, 24), der Deckel, der Monitor, das Bedienfeld und/oder das Touchscreen (15, 25) aus dem ersten Verwendungszustand in den zweiten Verwendungszustand mittels eines zweiten Aktuators oder bei Kontakt der Mittelkonsole (10, 20) mit dem Armaturenbrett (6) mittels einer Rampe am Armaturenbrett (6) bewegbar ist.

4. Kraftfahrzeug nach einem der vorangehenden Ansprüche, **dadurch gekennzeichnet, dass** das Verfahren der Mittelkonsole (10, 20) zwischen der ersten und zweiten Position und die Drehung der Mittelkonsole (10, 20) gleichzeitig stattfinden.

5. Kraftfahrzeug nach einem der vorangehenden Ansprüche, **dadurch gekennzeichnet, dass** der Vorsprung (13, 23) die Ablagefläche (14, 24), den Monitor, das Bedienfeld und/oder das Touchscreens (15, 25) aufweist, und/oder die Drehachse durch den Schwerpunkt der Mittelkonsole (10, 20) verläuft.

6. Kraftfahrzeug nach einem der vorangehenden Ansprüche, **gekennzeichnet durch** ein Energiespeichersystem, beispielsweise eine Rückstellfeder, die Bewegungsenergie bei der Änderung der Mittelkonsole (10, 20) aus dem ersten Verwendungszustand in den zweiten Verwendungszustand speichert und die gespeicherte Energie zur Zustandsänderung der Mittelkonsole (10, 20) vom zweiten Verwendungszustand zurück in den ersten Verwendungszustand nutzt.

7. Kraftfahrzeug nach Anspruch 6, **gekennzeichnet durch**
ein Arretierungssystem, insbesondere ein elektromagnetisches Arretierungssystem, das die gespeicherte Energie des Energiespeichersystems einbehalten und freigeben kann.

8. Kraftfahrzeug nach einem der vorangehenden Ansprüche, **dadurch gekennzeichnet, dass** die Mittelkonsole einen symmetrischen Aufbau relativ zu ihrer Längsachse senkrecht zu der Bodenoberfläche und senkrecht zur Fahrzeuglängsachse hat.

## Claims

1. A motor vehicle with a central console (10, 20), which is equipped with at least one resting surface (14, 24), a lid, a monitor, an operating panel and/or a touchscreen (15, 25) between two seats (3) in the motor vehicle,
wherein the central console (10, 20) is movable from a first usage state in a first position into a second usage state in a second position, wherein the position of the resting surface (14, 24), the lid, the monitor, the operating panel and/or the touchscreen (15, 25) changes between the first usage state and the second usage state, and the central console (10, 20) in the second usage state leaves a free space between the seats (3), and
wherein when the central console (10, 20) is moved, the resting surface (14, 24), the lid, the monitor, the operating panel and/or the touchscreen (15, 25) is movable from a first, essentially horizontal situation in the first usage state into a second, upright, almost vertical situation in the second usage state, wherein
the central console (10, 20) is foldable from the first usage state into the second usage state by pivoting around a transverse axis, wherein the central console (10, 20) has a base (11, 21), a column (12, 22), a projection (13, 23) and a pivot joint (16, 26), wherein
• the base (11) and the column (12) are connected via the pivot joint (16) and the column (12) and the projection (13) form a unit, or
• the base (21) and the column (22) form a unit and the column (22) and the projection (23) are connected via the pivot joint (26), and
the pivot axis of the pivot point of the pivot joint (16, 26) is arranged transverse to the longitudinal axis of the column (12, 22) and transverse to the course of a rail (8), **characterized in that**
the central console (10, 20) is displaceable from the first position into the second position and vice versa along the rail (8) to the dashboard (6) by means of a first actuator, and the central console (10, 20) in the second usage state leaves a free space between the seats (3) so that at least one of the seats (3) is movable by at least 45°, or at least 90°, about its longitudinal axis perpendicular to the vehicle floor (9) past the central console (10, 20),
wherein the second usage state is a stowage state, in which the central console (10, 20) is at least partially integrated in the dashboard (6) and/or is adapted to the contour of the dashboard (6),
wherein in the first usage state, an arm of a vehicle passenger can be rested on the at least one resting surface (14, 24) and the touchscreen (15, 25) and/or the operating panel can be operated with the rested arm, and in the second usage state, the touchscreen (15, 25), the operating panel and/or the monitor is located at least in the peripheral field of vision of a vehicle passenger (2) when looking at the dashboard (6).

2. The motor vehicle according to Claim 1, **characterized in that**
the first actuator is designed in the form of a linear motor and/or a rigid chain or threaded spindle driven by an electric motor or a powered belt, and/or
the rail (8) in the longitudinal vehicle direction is arranged at least between the seats (3) facing the dashboard (6) and/or comprises a current feed to the central console (10, 20).

3. The motor vehicle according to any one of the preceding claims, **characterized in that** the resting surface (14, 24), the lid, the monitor, the operating panel and/or the touchscreen (15, 25) is movable from the first usage state into the second state by means of a second actuator, or by means of a ramp on the dashboard (6) when there is contact between the central console (10, 20) and the dashboard (6).

4. The motor vehicle according to any one of the preceding claims, **characterized in that** the displacement of the central console (10, 20) between the first and the second position and the pivoting of the central console (10, 20) occur simultaneously.

5. The motor vehicle according to any one of the preceding claims, **characterized in that** the projection (13, 23) contains the resting surface (14, 24), the monitor, the operating panel and/or the touchscreen (15, 25), and/or the pivot axis runs through the center of gravity of the central console (10, 20).

6. The motor vehicle according to any one of the preceding claims, **characterized by** an energy storage system, such as a return spring, which stores kinetic energy when the central console (10, 20) is changed from the first usage state into the second usage state, and which uses the stored energy to change the state of the central console (10, 20) from the second usage state back into the first usage state.

7. The motor vehicle according to Claim 6, **characterized by**
an arresting system, in particular an electromagnetic arresting system, which can retain and release the stored energy of the energy storage system.

8. The motor vehicle according to any one of the preceding claims, **characterized in that** the central console has a symmetrical structure relative to its longitudinal axis vertical to the floor surface and vertical to the vehicle longitudinal axis.

## Revendications

1. Véhicule automobile avec une console centrale (10, 20), laquelle est munie d'au moins une surface support (14, 24), un couvercle, un écran, un panneau de commande et/ou un écran tactile (15, 25) entre deux sièges (3) dans le véhicule automobile,
la console centrale (10, 20) pouvant passer d'un premier état d'utilisation dans une première position à un deuxième état d'utilisation dans une deuxième position, la position de la surface support (14, 24), du couvercle, de l'écran, du panneau de commande et/ou de l'écran tactile (15, 25) entre le premier état d'utilisation et le deuxième état d'utilisation étant modifiée, et la console centrale (10, 20) dégageant un espace libre entre les sièges (3) dans le deuxième état d'utilisation, et
la surface support (14, 24), le couvercle, l'écran, le panneau de commande et/ou l'écran tactile (15, 25) pouvant passer d'une première position essentiellement horizontale dans le premier état d'utilisation à une deuxième position debout presque verticale dans le deuxième état d'utilisation,
la console centrale (10, 20) étant basculable du premier état d'utilisation vers le deuxième état d'utilisation par pivotement sur un axe transversal, la console centrale (10, 20) présentant une base (11, 21), une colonne (12, 22), une saillie (13, 23) et une articulation pivotante (16, 26),
• la base (11) et la colonne (12) étant reliées par l'articulation pivotante (16) et la colonne (12) et la saillie (13) formant une unité, ou
• la base (21) et la colonne (22) formant une unité et la colonne (22) et la saillie (23) étant reliées par l'articulation pivotante (26), et
l'axe de rotation du pivot de l'articulation pivotante (16, 26) étant disposé transversalement par rapport à l'axe longitudinal de la colonne (12, 22) et transversalement par rapport au trajet d'un rail (8),
**caractérisé en ce que**
la console centrale (10, 20) est déplaçable le long du rail (8) vers le tableau de bord (6), de la première position à la deuxième position et inversement, au moyen d'un premier actionneur, et la console centrale (10, 20) dégage un espace libre entre les sièges (3) dans le deuxième état d'utilisation, de telle sorte qu'au moins un des sièges (3) est déplaçable à côté de la console centrale (10, 20) verticalement par rapport au plancher de véhicule (9), d'au moins 45°, ou d'au moins 90°, sur son axe longitudinal,
le deuxième état d'utilisation étant un état de rangement dans lequel la console centrale (10, 20) est intégrée au moins partiellement au tableau de bord (6) et/ou est ajustée aux contours du tableau de bord (6),
un bras d'un occupant du véhicule pouvant être posé sur l'au moins une surface support (14, 24), dans le premier état d'utilisation, et l'écran tactile (15, 25) et/ou le panneau de commande pouvant être utilisés avec le bras posé, et l'écran tactile (15, 25), le panneau de commande et/ou l'écran se trouvant au moins dans le champ de vision périphérique d'un occupant du véhicule (2), avec regard tourné vers le tableau de bord (6), dans le deuxième état d'utilisation.

2. Véhicule automobile selon la revendication 1, **caractérisé en ce que**
le premier actionneur est réalisé sous forme d'un moteur linéaire et/ou d'une chaîne de poussée ou d'une broche filetée entraînées par un moteur électrique ou d'une courroie entraînée, et/ou
le rail (8) est disposé dans la direction longitudinale du véhicule vers le tableau de bord (6), au moins entre les sièges (3), et/ou comprend une alimentation électrique vers la console centrale (10, 20).

3. Véhicule automobile selon l'une quelconque des revendications précédentes, **caractérisé en ce que**
la surface support (14, 24), le couvercle, l'écran, le panneau de commande et/ou l'écran tactile (15, 25) peuvent passer du premier état d'utilisation au deuxième état d'utilisation à l'aide d'un deuxième actionneur ou par contact de la console centrale (10, 20) avec le tableau de bord (6) au moyen d'une rampe sur le tableau de bord (6).

4. Véhicule automobile selon l'une quelconque des revendications précédentes, **caractérisé en ce que**
le déplacement de la console centrale (10, 20) entre la première position et la deuxième position ainsi que la rotation de la console centrale (10, 20) sont effectués de façon simultanée.

5. Véhicule automobile selon l'une quelconque des revendications précédentes, **caractérisé en ce que**
la saillie (13, 23) présente la surface support (14, 24), l'écran, le panneau de commande et/ou l'écran tactile (15, 25), et/ou **en ce que** l'axe de rotation passe par le centre de gravité de la console centrale (10, 20).

6. Véhicule automobile selon l'une quelconque des revendications précédentes, **caractérisé par**
un système de stockage d'énergie, par exemple un ressort de rappel, stockant l'énergie cinétique lors du passage de la console centrale (10, 20) du premier état d'utilisation au deuxième état d'utilisation, et utilisant l'énergie stockée pour le changement d'état de la console centrale (10, 20), par le retour du deuxième état d'utilisation au premier état d'utilisation.

7. Véhicule automobile selon la revendication 6, **caractérisé par**
un système d'arrêt, en particulier un système d'arrêt électromagnétique, lequel peut conserver et libérer l'énergie stockée du système de stockage d'énergie.

8. Véhicule automobile selon l'une quelconque des revendications précédentes, **caractérisé en ce que**
la console centrale a une construction symétrique relativement à son axe longitudinal verticalement par rapport à la surface du plancher et verticalement par rapport à l'axe longitudinal du véhicule.
